# EUROPÄISCHE PATENTSCHRIFT

(11) **EP 1 479 609 B1**
(45) Veröffentlichungstag und Bekanntmachung des Hinweises auf die Patenterteilung: **02.01.2008**
(21) Anmeldenummer: 04009934.3
(22) Anmeldetag: 27.04.2004
(51) Int. Cl.: B65B 13/32

(54) **Schweisskopf für eine Bandumreifungsmaschine**
Welding head for a strapping machine
Tête de soudage pour une machine de cerclage

(30) Priorität: 22.05.2003 DE 10323153
(43) Veröffentlichungstag der Anmeldung: 24.11.2004
(73) Patentinhaber: Schmetzer, Helmut, D-95448 Bayreuth (DE)
(72) Erfinder: Schmetzer, Helmut, D-95448 Bayreuth (DE)
(74) Vertreter: Blaumeier, Jörg

(56) Entgegenhaltungen:
- GB-A- 2 150 523
- JP-A- 62 251 314
- US-A- 5 615 538
- PATENT ABSTRACTS OF JAPAN Bd. 1995, Nr. 02, 31. März 1995 (1995-03-31) & JP 6 329109 A (KITANI KOSAKUSHO:KK), 29. November 1994 (1994-11-29)

## Beschreibung

Die Erfindung betrifft einen Schweißkopf für eine Bandumreifungsmaschine, umfassend ein in den und aus dem Bandführungsweg bewegbares Bandführungselement, eine in den und aus dem Bandführungsweg bewegbare Schweißeinrichtung zum Anschmelzen der zu verschweißenden Bandabschnitte der einander überlappenden Bandenden, sowie eine Anpresseinrichtung zum Pressen der angeschmolzenen Bandabschnitte gegen ein Druckstück.

Eine Bandumreifungsmaschine dient zum Umreifen eines Packguts, beispielsweise eines Katalog- oder Zeitschriftenstapels, mit einem Umreifungsband, in der Regel einem stabilen Kunststoffband. Um dieses im um das Packgut gespannten Zustand zu fixieren ist ein Schweißkopf vorgesehen, der es ermöglicht, die beiden einander überlappenden Bandenden des über eine geeignete Einschießvorrichtung zunächst in einen das Packgut umgebenden Rahmen, der anschließend geöffnet und das Band fest umspannt wird (wozu ein aus der nachveröffentlichten deutschen Patentanmeldung DE 102 32 580 A1 bekanntes Spannsystem verwendet werden kann), zugeführten Umreifungsbandes zu verbinden. Dies geschieht dadurch, dass die Bandenden im Überlappungsbereich mittels einer Schweißeinrichtung lokal angeschmolzen und mittels einer Anpresseinrichtung fest gegen ein Druckstück gepresst werden, so dass sich die Verbindung im aufgeschmolzenen Bereich ergibt. Die Arbeitsweise einer Umreifungsmaschine ist hinreichend bekannt, ein näheres Eingehen hierauf ist nicht erforderlich.

Ein Schweißkopf der anfangs genannten Art ist beispielsweise aus EP 1 076 006 bekannt. Bei dem dort beschriebenen Schweißkopf ist ein längs einer horizontalen Längsführung bewegbares Bandführungsteil vorgesehen, das dazu dient, das im Rahmen des Einschießvorgangs eingeschossenen Band zu führen. Um die Bandenden miteinander verschweißen zu können ist es erforderlich, das Bandführungsteil vor dem Schweißvorgang aus dem Bandführungsweg zu bewegen und im Gegenzug die Schweißeinrichtung dort zu positionieren, um die Bandenden aufzuschmelzen, so dass die aufgeschmolzenen Bandabschnitte nachfolgend noch verpresst werden können. Das heißt, neben dem Bandführungselement bei dem Schweißkopf gemäß EP 1 076 006 ist auch die Schweißeinrichtung in einer Längsführung längsbeweglich aufgenommen, um zwischen der Nichtarbeitsstellung und der Arbeitsstellung im Bandführungsweg zwischen den Bandenden verschoben werden zu können. Das Anpressen erfolgt mittels einer ebenfalls längsverschiebbar, im Unterschied zu dem horizontal geführten Bandführungsteil und der Schweißeinrichtung jedoch vertikal verschiebbaren Anpresseinrichtung, die nach dem die Schweißeinrichtung wieder aus dem Bandführungsweg gezogen wurde die aufgeschmolzenen Bandabschnitte zusammen gegen ein Druckstück presst.

Insgesamt sind also mehrere Längsführungen für die unterschiedlichen, im Rahmen eines Schweißvorgangs zu bewegenden Teile vorgesehen, was aus mehrerlei Gründen nachteilig ist. Zum einen sind Längsführungen konstruktiv aufwendig, es müssen exakt aufeinander abgestimmte Führungen und bewegliche Teile vorgesehen sein, damit eine exakte Bewegung möglich ist. Ferner ist eine kontinuierliche Schmierung erforderlich, um eine reibungsarme Bewegung sicherstellen zu können. Nachteilig ist ferner, dass die Längsführungen häufig verschmutzen, nachdem sie in der Regel offen sind.

Ferner ist aus GB-A-2 150 523 ein Schweißkopf mit den Merkmalen des Oberbegriffs des Patentanspruchs 1 bekannt.

Der Erfindung liegt das Problem zugrunde, einen Schweißkopf anzugeben, der in konstruktiver wie funktioneller Hinsicht gegenüber verbessert ist.

Zur Lösung dieses Problems ist bei einem Schweißkopf der eingangs genannten Art erfindungsgemäß vorgesehen, dass das Bandführungselement und die Schweißeinrichtung mit der längsbewegbaren Anpresseinrichtung derart bewegungsgekoppelt sind, dass sie in Abhängigkeit der Bewegung der Anpresseinrichtung in den und aus dem Bandführungsweg bewegbar sind, wobei das Bandführungselement direkt mit der Anpresseinrichtung und die Schweißeinrichtung direkt mit dem Bandführungselement derart gekoppelt ist, dass bei einer Bewegung des Bandführungselements aus dem Bandführungsweg die Schweißeinrichtung in den Bandführungsweg bewegt wird, oder die Schweißeinrichtung direkt mit der Anpresseinrichtung und das Bandführungselement direkt mit der Schweißeinrichtung derart gekoppelt ist, dass bei einer Bewegung der Schweißeinrichtung in den Bandführungsweg das Bandführungselement aus dem Bandführungsweg bewegt wird, oder sowohl die Schweißeinrichtung als auch das Bandführungselement direkt mit der Anpresseinrichtung bewegungsgekoppelt sind.

Die im Stand der Technik vorgesehenen aufwändigen und nachteiligen Längsführungen des Bandführungselements und der Schweißeinrichtung sind zugunsten einer schwenkbaren Lagerung dieser Teile aufgelöst. Die Schwenklagerung ist wesentlich einfacher in konstruktiver wie auch kostentechnischer Sicht, darüber hinaus ist diese Art der Lagerung wesentlich unanfälliger und bedarf keiner kontinuierlichen Schmierstoffzufuhr, eine Verschmutzung ist weitgehend ausgeschlossen. Lediglich die Anpresseinrichtung ist längsgeführt, wobei die Anpresseinrichtung das zentrale, die Bewegung des Bandführungselements und der Schweißeinrichtung steuernde Element ist, nachdem beide direkt oder indirekt mit ihr bewegungsgekoppelt sind. Die Bewegungskoppelung ist dabei derart, dass je nach Bewegung der Anpresseinrichtung das Bandführungselement und die Schweißeinrichtung in beziehungsweise aus dem Bandführungsweg bewegt werden.

Insgesamt ergibt sich damit ein in konstruktiver wie auch kostentechnischer Hinsicht wesentlich zweckmäßigerer Schweißkopf, bei dem lediglich noch eine Längsführung vorgesehen ist. Die im Stand der Technik gegebenen Probleme sind damit vorteilhaft nicht mehr gegeben.

Eine zweckmäßige erste Erfindungsalternative sieht vor, dass das Bandführungselement direkt mit der Anpresseinrichtung und die Schweißeinrichtung direkt mit dem Bandführungselement derart gekoppelt ist, dass bei einer Bewegung des Bandführungselements aus dem Bandführungsweg die Schweißeinrichtung in dem Bandführungsweg bewegt wird. Bei dieser Erfindungsausgestaltung ist also das Bandführungselement direkt mit der Anpresseinrichtung gekoppelt, die Schweißeinrichtung ist mit der Anpresseinrichtung indirekt eben über das Bandführungselement gekoppelt.

Eine Alternativausführung sieht in umgekehrter Bewegungskoppelung vor, dass die Schweißeinrichtung direkt mit der Anpresseinrichtung und das Bandführungselement direkt mit der Schweißeinrichtung - damit indirekt mit der Anpresseinrichtung - derart gekoppelt ist, dass bei einer Bewegung der Schweißeinrichtung in den Bandführungsweg das Bandführungselement aus dem Bandführungsweg bewegt wird. Es sind hier also unterschiedliche Ausführungen hinsichtlich der Bewegungskoppelung denkbar. Natürlich ist es auch möglich, sowohl das Bandführungselement wie auch die Schweißeinrichtung direkt mit der Anpresseinrichtung zu koppeln.

Eine zweckmäßige Erfindungsausgestaltung sieht vor, das Bandführungselement und die Schweißeinrichtung während der gemeinsamen Bewegung um einen gemeinsamen Drehpunkt in die gleiche Richtung zu schwenken. Beide sind also um eine gemeinsame Achse drehbar gelagert, so dass eine separate Drehachse fortfällt.

Eine besonders zweckmäßige Erfindungsausgestaltung sieht vor, dass die Bewegungskoppelung des Bandführungselements und der Schweißeinrichtung bei Erreichen der Arbeitsstellung der Schweißeinrichtung automatisch gelöst wird. Das heißt, die Bewegungskoppelung beider Teile ist nur temporär, wobei die Bewegungskoppelung dann, wenn sie nicht mehr benötigt wird, automatisch gelöst wird. Eine lösbare Bewegungskoppelung kann auf zweckmäßige Weise mittels einer Magnetkoppelung erfolgen, wozu am Bandführungselement und/oder Schweißeinrichtung ein Magnet vorgesehen ist. Die Magnetkoppelung lässt ein einfaches, reversibles Koppeln beider Teile zu.

Zweckmäßigerweise ist die Schweißeinrichtung und/oder das Bandführungselement gegen eine Rückstellkraft in die oder aus der Arbeitsstellung bewegbar, was auf einfache Weise unter Verwendung einer eine Rückstellkraft erzeugenden, je nach Ausgestaltung in die Arbeits- oder Nichtarbeitsstellung ziehenden oder drängenden Feder realisiert werden kann.

Zur einfachen Bewegungskoppelung des einen oder anderen Teils mit der Anpresseinrichtung ist es zweckmäßig, wenn an der Anpresseinrichtung oder dem mit ihr direkt gekoppelten Bandführungselement oder der direkt gekoppelten Schweißeinrichtung eine der Bewegungssteuerung des Bandführungselements oder der Schweißeinrichtung dienenden Führungsfläche vorgesehen ist, entlang welcher das Bandführungselement oder die Schweißeinrichtung oder die Anpresseinrichtung gleitet. Zweckmäßigerweise ist in diesem Zusammenhang am Bandführungselement oder der Schweißeinrichtung oder der Anpresseinrichtung eine entlang der jeweiligen Führungsfläche gleitende Rolle oder Walze oder dergleichen vorgesehen.

Eine besonders vorteilhafte Erfindungsausgestaltung sieht vor, neben dem Bandführungselement und der Schweißeinrichtung auch das Druckstück schwenkbar zu lagern und dieses wie auch die beiden anderen Teile mit der Anpresseinrichtung derart direkt oder indirekt zu koppeln, dass es in Abhängigkeit der Bewegung der Anpresseinrichtung zwischen einer Arbeitsstellung, in der die Bandenden durch die Anpresseinrichtung dagegen drückbar sind, und einer Nichtarbeitsstellung, in der das verschweißte Umreifungsband freigegeben ist, bewegbar ist. Diese Erfindungsausgestaltung beseitigt den im Stand der Technik gegebenen Nachteil, dass in der Regel auch das Druckstück, das während des Verschweißvorgangs als Gegenlager für die Anpresseinrichtung dient und danach zurückgezogen werden muss, damit das Umreifungsband freigegeben wird, ebenfalls längsbeweglich gelagert ist und damit eine weitere nachteilige Längsführungsmimik vorgesehen ist. Erfindungsgemäß ist nun zusätzlich zu den beiden anderen Teilen auch das Druckstück schwenkbar gelagert und mit der Anpresseinrichtung bewegungsgekoppelt, so dass auch diese Nachteile vorteilhaft beim erfindungsgemäßen Schweißkopf nicht gegeben sind. Zweckmäßigerweise ist zur Bewegungskoppelung an der Anpresseinrichtung oder dem Druckstück eine Führungsfläche vorgesehen, längs welcher das Druckstück oder die Anpresseinrichtung zur Bewegungssteuerung gleitet, wobei auch hier zweckmäßigerweise eine Rolle oder Walze oder dergleichen, die entlang der Führungsfläche gleitet, an einem der Teile vorgesehen sein kann.

Eine konkrete Realisierung der Bewegungskoppelung kann dabei vorsehen, dass die Anpresseinrichtung nach dem Zusammenpressen der angeschmolzenen Bandenden weiter in der Anpressrichtung bewegbar ist, während welcher Bewegung das bis dahin an der Führungsfläche gegengelagerte Druckstück freigegeben wird und wegschwenkt. Hierzu kann an der Anpresseinrichtung ein oben liegender Anpressabschnitt vorgesehen sein, der über wenigstens ein Federelement mit dem Grundkörper der Anpresseinrichtung verbunden ist, welches Federelement während der weiteren Bewegung der Anpresseinrichtung komprimiert wird.

Ersichtlich sind beim erfindungsgemäßen Schweißkopf mit besonderem Vorteil von den im Stand der Technik vorgesehenen vier Längsführungen der Anpresseinrichtung, des Bandführungselements, der Schweißeinrichtung wie auch des Druckstücks lediglich noch eine, nämlich die der Anpresseinrichtung, vorhanden, wobei der Anpresseinrichtung hinsichtlich der Bewegungssteuerung die zentrale Rolle beim erfindungsgemäßen Schweißkopf zukommt. Die anderen Teile des erfindungsgemäßen Schweißkopfes sind mit besonderem Vorteil über konstruktiv einfache, wartungs- und verschleißarme Schwenklagerungen realisiert.

Neben dem erfindungsgemäßen Schweißkopf betrifft die Erfindung ferner eine Bandumreifungsmaschine umfassend einen Schweißkopf der beschriebenen Art.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Figuren 1a-8b: den erfindungsgemäßen Schweißkopf in verschiedenen, während eines Verschweißvorgangs eingenommenen Stellungen, wobei die mit "a" gekennzeichneten Figuren jeweils eine Vorderseitenansicht und die mit "b" gekennzeichneten Figuren eine Seitenansicht der jeweils gleichen Stellung zeigen,
- Fig. 9: eine Prinzipdarstellung einer Umreifungsmaschine mit dem Schweißkopf in einer Vorderseitenansicht, und
- Fig. 10: die Umreifungsmaschine aus Fig. 9 in einer Seitenansicht.

Die Figuren zeigen jeweils eine Vorderansicht und die zugehörige Seitenansicht, wobei aus Gründen der Übersichtlichkeit manche Teile nur in der einen oder der anderen Darstellung gezeigt sind.

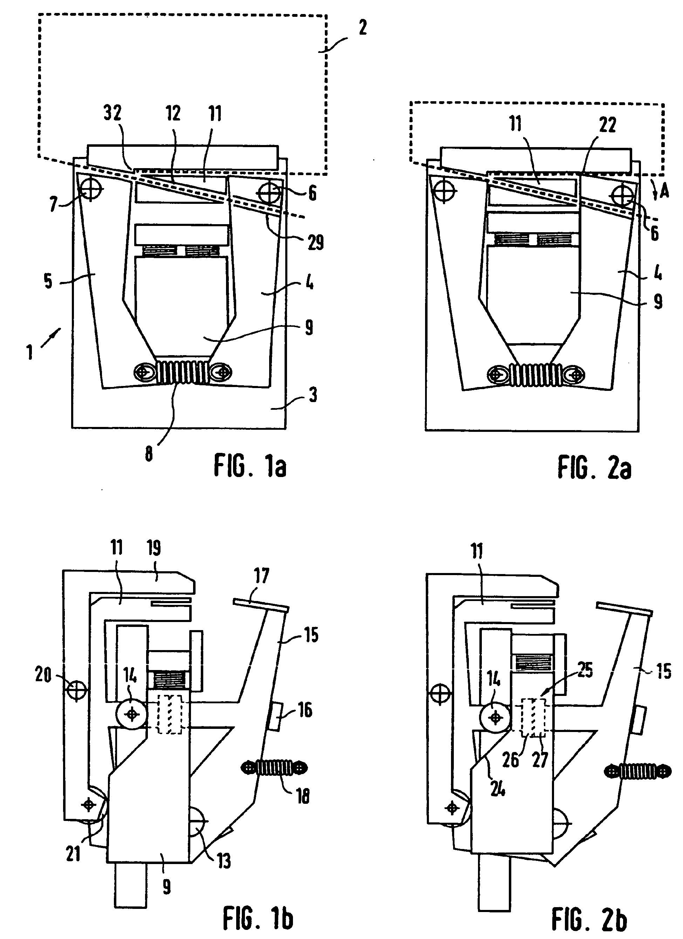

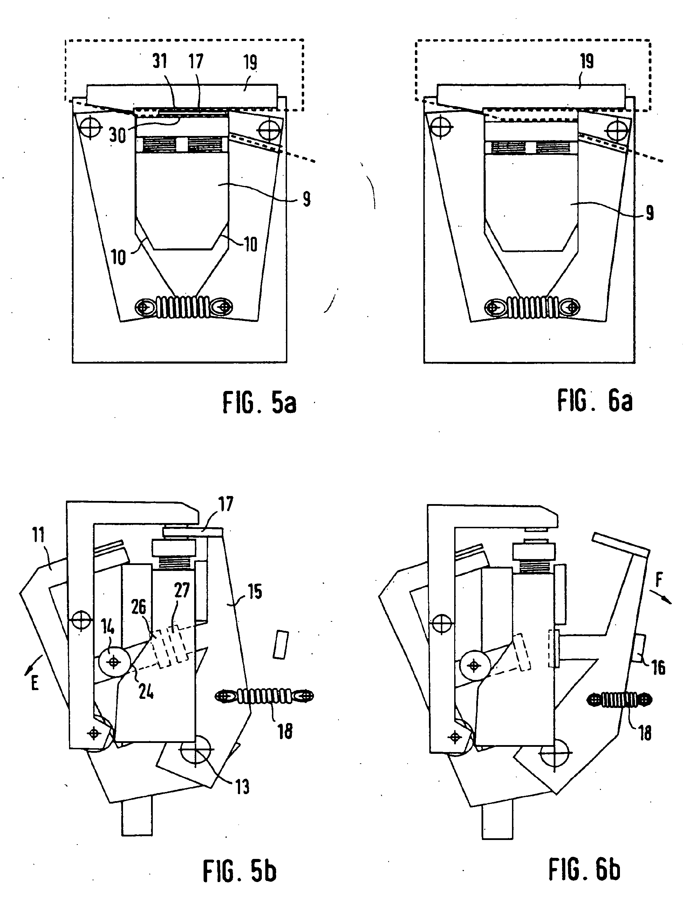

Die Figuren 1a und 1b zeigen den erfindungsgemäßen Schweißkopf 1 in seiner Ausgangsstellung, nachdem das Umreifungsband 2 eingeschossen worden ist und noch in einem nicht näher gezeigten, das ebenfalls nicht näher gezeigte Packgut umgebenden Rahmen geführt ist. Der erfindungsgemäße Schweißkopf 1 weist eine Grundplatte 3 auf, an der ein rechter Klemmbacken 4 und ein linker Klemmbacken 5 jeweils um ein Schwenklager 6, 7 schwenkbar gelagert sind. An ihrem unteren Ende sind beide über eine Feder 8 miteinander gekoppelt. Zwischen den beiden Klemmbacken 4, 5 befindet sich die über eine nicht näher gezeigte Längsführung längsbewegliche Anpresseinrichtung 9, mit der beide Klemmbacken 4, 5 unmittelbar bewegungsgekoppelt ist. Zu diesem Zweck sind an der Anpresseinrichtung - siehe beispielsweise Fig. 5a - zwei Führungsflächen 10 an beiden Seiten vorgesehen, die mit geeigneten, an den jeweiligen Klemmbacken 4, 5 vorgesehenen Abschnitten zusammenwirken. In der in Fig. 1a gezeigten Stellung ist die Anpresseinrichtung 9 in der abgesenkten Position, in der sie an den Klemmbacken 4, 5 angreift und diese in die nicht am Umreifungsband 2 angreifende Stellung nach Außen drängt, die Feder 8 ist gespannt.

Gezeigt ist ferner ein Bandführungselement 11, das einen schräg verlaufenden Führungskanal 12 aufweist, in den das Band in Fig. 1a von rechts kommend eingeschossen wird. Das Bandführungselement 11 ist um die Schwenkachse 13 (siehe hierzu auch z.B. Fig. 5b) schwenkgelagert. Es kann zwischen der in Figuren 1a und 1b gezeigten Arbeitsstellung und der beispielsweise in den Figuren 5a und 5b gezeigten ausgeschwenkten, sich also nicht im Bandführungsweg befindlichen Stellung verschwenkt werden. Zu diesem Zweck ist das Bandführungselement 11 ebenfalls mit der Anpresseinrichtung 9 direkt bewegungsgekoppelt, wozu am Bandführungselement 11 eine Rolle 14 vorgesehen ist, die rückseitig an der Anpresseinrichtung 9 angreift. Die Grundplatte 3 ist zu diesem Zweck durchbrochen, so dass die einzelnen Teile miteinander zusammenwirken können. Bereits an dieser Stelle ist darauf hinzuweisen, dass die Figuren das konstruktive Grundprinzip zeigen und selbstverständlich geeignete weitere Gehäuse- oder Halteteile vorgesehen sind, die die jeweiligen Drehachsen etc. bilden.

Ferner ist eine Schweißeinrichtung 15 vorgesehen, die - siehe beispielsweise die Figuren 1b und 5b - zwischen einer Nichtarbeitsstellung (Fig. 1b), in der sie an einem geeigneten Gegenlager 16 gegengelagert ist, und einer Arbeitsstellung (Fig. 5b), in der sie sich mit der das Aufschmelzen der Bandenden bewirkenden Schweißzunge 17 im Bandführungsweg befindet, bewegbar ist. Die Schweißeinrichtung 15 ist zusammen mit dem Bandführungselement 11 schwenkbar um das gemeinsame Drehlager 13 gelagert, und gegen die Rückstellkraft einer Feder 18 in die Arbeitsstellung bewegbar.

Schließlich ist ein Druckstück in Form einer Druckplatte 19 vorgesehen, gegen die - siehe beispielsweise Fig. 5b - die Anpresseinrichtung 9 die Bandenden drückt. Die Druckplatte 19 ist ebenfalls um ein Drehlager 20 schwenkbar gelagert. Über eine Rolle 21 ist sie ebenfalls direkt mit der Anpresseinrichtung 9 an deren Rückseite bewegungsgekoppelt und dort gegengelagert.

Insgesamt ist also lediglich die Anpresseinrichtung 9 längsbeweglich gelagert, während die beiden Klemmbacken 4, 5, das Bandführungselement 11, die Schweißeinrichtung 15 wie auch die Druckplatte 19 allesamt in einfachen Schwenklagern beweglich aufgenommen sind.

Ausgehend von den Figuren 1a, 1b wird nun im Folgenden der Arbeitsgang des Schweißkopfes 1 beschrieben.

Wie bereits erwähnt, zeigen die Figuren 1a und 1b die Situation unmittelbar nach dem Einschießen des Umreifungsbandes 2. Ausgehend von dieser Stellung wird die Anpresseinrichtung 9 etwas nach oben in die in den Figuren 2a, 2b gezeigte Stellung bewegt. Dies führt dazu, dass zunächst der rechte Klemmbacken 4 freigegeben wird, nachdem die ihm zugeordnete Führungsfläche 10, ausgebildet als Schrägfläche, während der Bewegung nach oben gezogen wird, und der Klemmbacken 4 daran entlang gleiten kann. Aufgrund der Rückstellkraft der Feder 8 wird er dabei in Richtung des Pfeils A um das Drehlager 6 bewegt, bis der Klemmabschnitt 22, hier die linke obere und nach innen gerichtete Kante, am Umreifungsband 2 angreift. Ersichtlich liegt der Klemmabschnitt 22 links und nach innen gerichtet vom Drehlager 6. Dies führt dazu, dass der Klemmbacken 4 während der Rückzugsbewegung des Umreifungsbandes 2, das entgegen der Einschussrichtung wieder in den Bandspeicher, der - wie auch die sonstigen Teile einer bekannten Umreifungsvorrichtung - hier nicht näher gezeigt ist, um das Band um das zu umreifende Packgut zu spannen. Um das Umreifungsband 2 zu fixieren, greift zu diesem Zeitpunkt bereits der Klemmbacken 4 an. Aufgrund der Lage des Klemmabschnitts 22 verklemmt sich dieser noch stärker mit dem Band, das nach dem Öffnen des hier nicht gezeigten Rahmens entgegen der Einschussrichtung zurückgezogen wird. Das Umreifungsband ist damit einseitig fixiert. Ausgehend von der Stellung in den Figuren 2a, 2b wird nun die Anpresseinrichtung 9 weiter nach oben geschoben, bis die dem linken Klemmbacken 5 zugeordnete Führungsfläche 10 der Anpresseinrichtung 9 auch diesen insoweit freigibt, dass er aufgrund der Rückstellkraft der Feder 8 verschwenkt und klemmend am Umreifungsband 2 angreift (Pfeil B). Auch hier befindet sich der Klemmabschnitt 23 rechts zur Mitte hin am oberen Teil des Klemmbackens 5.

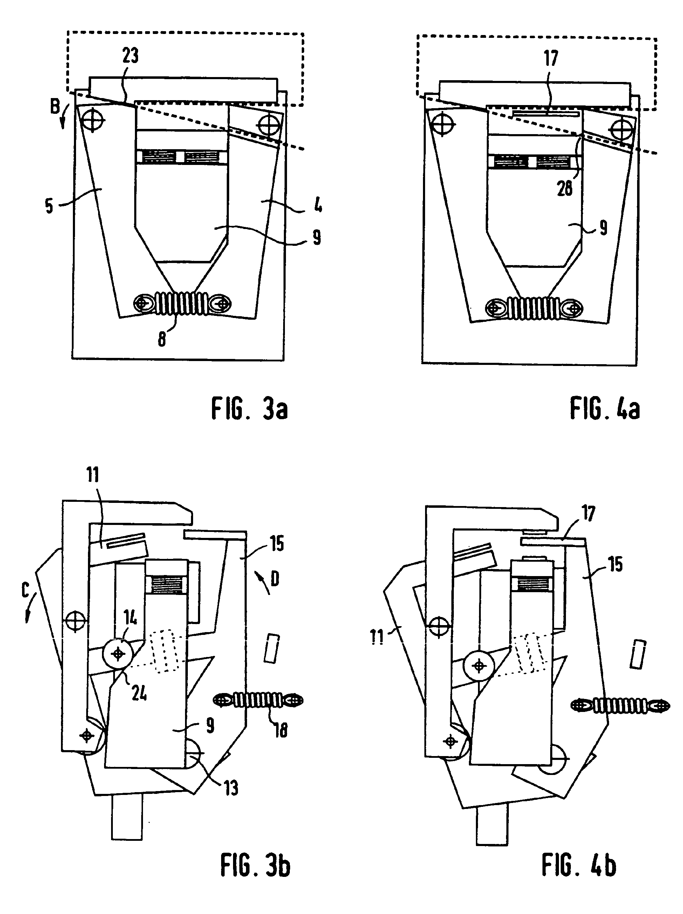

Während dieser Bewegung wird gleichzeitig das Bandführungselement 11 aus dem Bandführungsweg, in dem es sich in der Stellung gemäß Figuren 2a, 2b noch befindet, herausgeschwenkt, siehe Fig. 3b. Dies wird dadurch realisiert, dass während der Bewegung der Anpresseinrichtung 9 in die Stellung gemäß Figuren 3a, 3b die Rolle 14 auf die schräge Führungsfläche 24 an der Rückseite der Anpresseinrichtung 9 aufläuft und hierüber gesteuert das Bandführungselement um das Drehlager 13 nach links aus dem Bandführungsweg geschwenkt wird (Pfeil C).

Gleichzeitig mit dieser Ausschwenkbewegung des Bandführungselements 11 wird die Schweißeinrichtung 15 in Richtung des Bandführungsweges bewegt, siehe Fig. 3b. Zu diesem Zweck ist das Bandführungselement 11 und die Schweizeinrichtung 15 direkt miteinander bewegungsgekoppelt, wozu eine Magnetkopplung 25 vorgesehen ist, die im gezeigten Beispiel zwei Magnete 26, 27 umfasst, von denen je einer am Bandführungselement 11 beziehungsweise der Schweißeinrichtung 15 angeordnet ist. Bewegt sich also die Schweißeinrichtung 15, wird automatisch während der gegebenen Kopplung auch die Schweißeinrichtung 15 um das gemeinsame Drehlager 13 bewegt (Pfeil D). Die Feder 18 wird dabei gespannt. In jedem Fall ist das um das Packgut gespannte Umreifungsband nach Erreichen der Stellung gemäß der Figuren 3a, 3b an zwei Stellen über die Klemmbacken 4, 5 fixiert.

Wird nun ausgehend von der Stellung gemäß der Figuren 3a, 3b die Anpresseinrichtung 9 weiter nach oben bewegt, so läuft die Rolle 14 immer weiter auf der Führungsfläche 24 ab, so dass das Bandführungselement 11 immer weiter nach links aus dem Bandführungsweg und die Schweißeinrichtung 15 immer weiter nach links in den Bandführungsweg bewegt wird. Figuren 4a, 4b zeigen die Schweißeinrichtung 15 mit im Bandführungsweg befindlicher Schweißzunge 17.

Bewegt sich nun ausgehend von der Stellung gemäß den Figuren 4a, 4b die Anpresseinrichtung 9 weiter nach oben, so wird über eine Messerkante 28 das Umreifungsband 2 im Bereich des rechten Klemmbackens 4, der wie die Figuren zeigen eine entsprechende Durchführung 29 für das einzuschießende Band aufweist, abgeschnitten. Bei weiterem Anheben der Anpresseinrichtung 9 wird das hintere Bandende 30 mit dem vorderen Bandende 31, das nach wie vor in der ursprünglichen Position direkt unterhalb des Druckstücks 19, das eine entsprechende Fangkante 32 aufweist, liegt, überlappt, zwischen beiden befindet sich die heiße Schweißzunge 17. In dieser Position werden die beiden Bandenden aufgeschmolzen.

Während der Bewegung in die Stellung gemäß der Figuren 5a, 5b wird ferner die Magnetkoppelung 25 und damit die Bewegungskoppelung der Schweißeinrichtung 15 mit dem Bandführungselement 11 gelöst. Dies geschieht, da die Rolle 14 noch weiter auf der Führungsfläche 24 abläuft, also nach links geschwenkt wird (Pfeil E), während die Schweißeinrichtung 15 bereits in ihrer Arbeitsstellung fixiert ist.

Aufgrund der über die Führungsfläche 24 erfolgenden Zwangsbewegung des Bandführungselements 11 nach links werden beide Magnete 26, 27 zwangsläufig voneinander getrennt und damit die Schweißeinrichtung 15 freigegeben.

Nachfolgend (Fig. 6a, 6b) wird nun die Anpresseinrichtung 9 ein kurzes Stück zurückgezogen, so dass die Schweißverbindung zur Druckplatte 19 hin etwas entlastet und damit auch die geklemmte Schweißzunge 17 freigegeben wird. Dies führt dazu, dass die Schweißeinrichtung 15 vollständig freigegeben ist und in die in Fig. 6b gezeigte Nichtarbeitsstellung durch die Feder 18 zurückgezogen wird (Pfeil F).

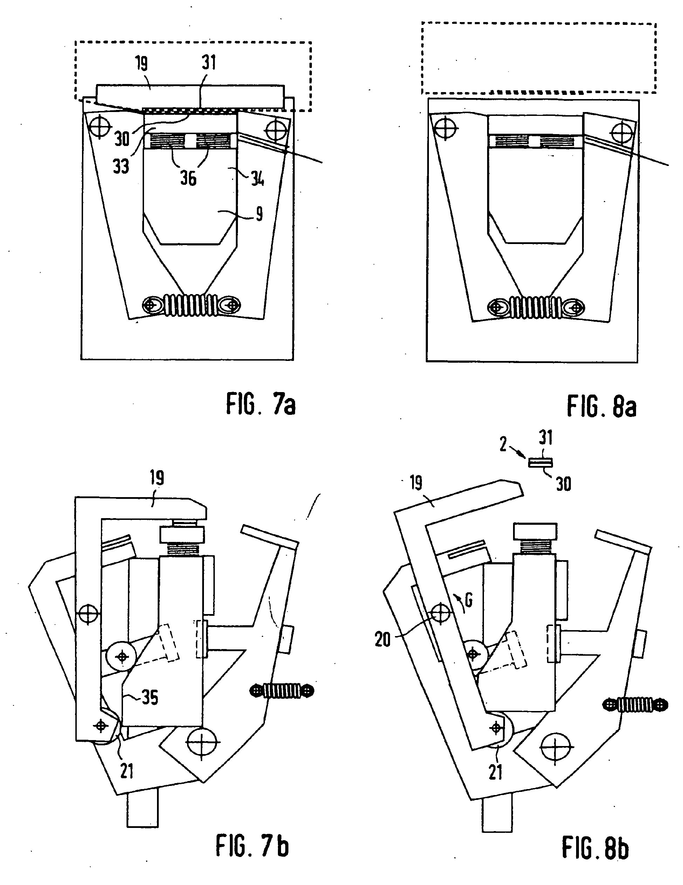

Im nächsten Schritt (Fig. 7a, 7b) wird nun die Anpresseinrichtung 9 erneut nach oben verfahren, so dass die Bandenden 30, 31 gegen die Druckplatte 19 zusammengepresst werden und sich in Folge des Aufschmelzens fest miteinander verbinden. Die beiden Bandenden 30, 31 werden für eine gewisse Zeit zusammengepresst, bis die Schweißverbindung hinreichend abgekühlt ist.

In der in den Figuren 7a, 7b gezeigten Stellung befindet sich zwischen dem verschweißten Umreifungsband und dem Packgut die Druckplatte 19, das heißt, das Packgut liegt auf der Druckplatte 19 auf. Es ist nun erforderlich, das verschweißte Umreifungsband freizugeben, damit das umreifte Packgut entnommen werden kann. Dies geschieht dadurch, dass die Anpresseinrichtung 9 noch etwas nach oben bewegt wird, wobei zwei Federn 36, über die der am unteren Bandende 30 angreifende Anpressabschnitt 33 der Anpresseinrichtung 9 mit dem Grundkörper 34 der Anpresseinrichtung verbunden ist, komprimiert werden. Der Grundkörper 34 bewegt sich noch etwas nach oben, was dazu führt, dass beim Übergang in die in den Figuren 8a, 8b gezeigte Stellung die Rolle 21, über die die Druckplatte 19 bis dahin an der Führungsfläche 35 der Anpresseinrichtung 9 gegengelagert war, freigegeben wird. Aufgrund des Drucks, den die Anpresseinrichtung 9 gegen die Druckplatte 19 ausübt, schwenkt diese automatisch bei Erreichen der Freigabestellung um das Drehlager 20 (Pfeil G) aus dem Bandführungsweg in die in Fig. 8b gezeigte Freigabestellung, in der das verschweißte Umreifungsband 2 freigegeben wird.

Anschließend fährt die Anpresseinrichtung 9 wieder nach unten, was dazu führt, dass zunächst die Druckplatte 19 wieder in die Ausgangsstellung geschwenkt wird, die Rolle 21 läuft also wieder auf die Führungsfläche 35 auf. Mit zunehmenden Absenken läuft auch die Rolle 14 des Bandführungselements 11 wieder auf der Führungsfläche 24, was dazu führt, dass das Bandführungselement 11 wieder in die in Fig. 1b gezeigte Stellung im Bandführungsweg bewegt wird. Dies kann über eine nicht näher gezeigte Feder, die das Bandführungselement 11 in die Stellung zurückzieht, welche Feder während des Herausschwenkens aus dem Bandführungsweg gespannt wird, realisiert werden. Mit Erreichen der Stellung im Bandführungsweg greifen auch beide Magneten 26, 27 wieder aneinander an, so dass die lösbare Bewegungskoppelung zwischen Bandführungselement 11 und Schweißkopf 1 ebenfalls wieder geschaffen ist. Während der Absenkbewegung der Anpresseinrichtung 9 werden ferner die beiden Klemmbacken 4, 5 nach Anlage der Führungsflächen 10 an diesen wieder auseinandergepresst, sie verschwenken um die Drehlager 6, 7 in die Stellung gemäß Fig. 1a. Damit kann ein weiterer Schweißvorgang, beginnend mit dem Einschuss des Umreifungsbandes, beginnen.

An dieser Stelle ist darauf hinzuweisen, dass die Figuren 1a - 8b lediglich Prinzipdarstellungen sind, die das Funktionsprinzip des erfindungsgemäßen Schweißkopfes darstellen. Aus Gründen der Übersichtlichkeit sind Gehäuseteile und dergleichen, an denen die jeweiligen Elemente geführt oder gelagert sind, nicht gezeigt. Dies gilt auch hinsichtlich der Bewegungssteuerung der Anpresseinrichtung 9, die wie beschrieben zyklisch gehoben und gesenkt werden muss. Dies kann z.B. über eine geeignete Kurvensteuerung erfolgen, oder aber über ein geeignetes Hubmittel, z.B. einen Zylinder, oder aber über einen Elektromotor etc.

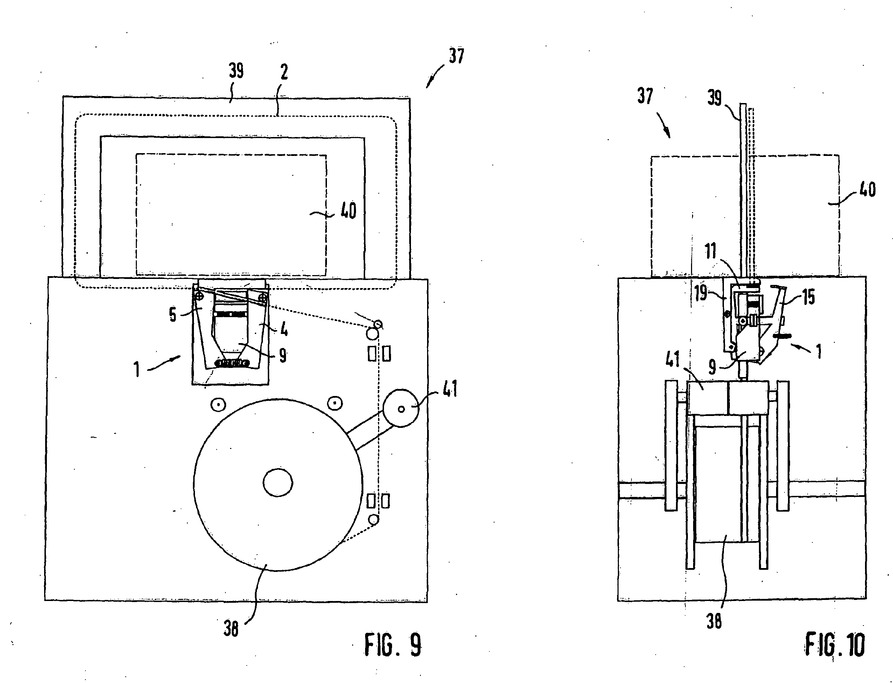

Die Fig. 9 und 10 zeigen eine Umreifungsmaschine mit dem beschriebenen Schweißkopf. Die Umreifungsmaschine 37 weist eine Bandrolle 38 auf, von der einzuschießendes Band 2 abgezogen wird. Dieses wird in einen Rahmen 39, der das Packgut 40 umgibt, durch den Schweißkopf 1 eingeschossen. Nach dem Fixieren des Bandes über den Klemmbacken 4 wird der Rahmen 39 geöffnet, so dass das Band 2 mittels des Hebelspanners 41, der nach links schwenkt und das Band mitnimmt, gespannt werden kann. Der Spannmechanismus ist aus der deutschen Patentanmeldung 102 32 580 A1 bekannt. Anschließend beginnt der beschriebene Schweißvorgang.

## Patentansprüche

1. Schweißkopf für eine Bandumreifungsmaschine, umfassend ein in den und aus dem Bandführungsweg bewegbares Bandführungselement, eine in den und aus dem Bandführungsweg bewegbare Schweißeinrichtung zum Anschmelzen der zu verschweißenden Bandabschnitte der einander überlappenden Bandenden, sowie eine Anpresseinrichtung zum Pressen der angeschmolzenen Bandabschnitte gegen eine Druckstück, wobei das Bandführungselement (11) und die Schweißeinrichtung (15) schwenkbar gelagert sind, **dadurch gekennzeichnet, dass** das Bandführungselement (11) und die Schweißeinrichtung (15) mit der längsbewegbaren Anpresseinrichtung (9) derart bewegungsgekoppelt sind, dass sie in Abhängigkeit der Bewegung der Anpresseinrichtung (9) in den und aus dem Bandführungsweg bewegbar sind, wobei
- das Bandführungselement (11) direkt mit der Anpresseinrichtung (9) und die Schweißeinrichtung (15) direkt mit dem Bandführungselement (11) derart gekoppelt ist, dass bei einer Bewegung des Bandführungselements (11) aus dem Bandführungsweg die Schweißeinrichtung (15) in den Bandführungsweg bewegt wird, oder
- die Schweißeinrichtung (15) direkt mit der Anpresseinrichtung (9) und das Bandführungselement (11) direkt mit der Schweißeinrichtung (15) derart gekoppelt ist, dass bei einer Bewegung der Schweißeinrichtung (15) in den Bandführungsweg das Bandführungselement (11) aus dem Bandführungsweg bewegt wird, oder
- sowohl die Schweißeinrichtung (15) als auch das Bandführungselement (11) direkt mit der Anpresseinrichtung (9) bewegungsgekoppelt sind.

2. Schweißkopf nach Anspruch 1, **dadurch gekennzeichnet, dass** das Bandführungselement (11) und die Schweißeinrichtung (15) während der gemeinsamen Bewegung um einen gemeinsamen Drehpunkt (13) in die gleiche Richtung schwenken.

3. Schweißkopf nach Anspruch 1 oder 2, **dadurch gekennzeichnet, dass** die Bewegungskopplung des Bandführungselements (11) mit der Schweißeinrichtung (15) bei Erreichen der Arbeitsstellung der Schweißeinrichtung (15) automatisch gelöst wird.

4. Schweißkopf nach einem der vorangehenden Ansprüche, **dadurch gekennzeichnet, dass** zur Kopplung des Bandführungselements (11) mit der Schweißeinrichtung (15) eine Magnetkopplung (25) vorgesehen ist.

5. Schweißkopf nach einem der vorangehenden Ansprüche, **dadurch gekennzeichnet, dass** die Schweißeinrichtung (15) und/oder das Bandführungselement (11) gegen eine Rückstellkraft in die oder aus der Arbeitsstellung bewegbar ist.

6. Schweißkopf nach Anspruch 5, **dadurch gekennzeichnet, dass** eine die Schweißeinrichtung (15) oder das Bandführungselement (11) in die Arbeits- oder die Nichtarbeitsstellung ziehende oder drängende Feder (18) zur Erzeugung der Rückstellkraft vorgesehen ist.

7. Schweißkopf nach einem der vorangehenden Ansprüche, **dadurch gekennzeichnet, dass** an der Anpresseinrichtung (9) oder dem mit ihm direkt gekoppelten Bandführungselement (11) oder der direkt gekoppelten Schweißeinrichtung (15) eine der Bewegungssteuerung des Bandführungselements (11) oder der Schweißeinrichtung (15) dienende Führungsfläche (24) vorgesehen ist, entlang welcher das Bandführungselement (11) oder die Schweißeinrichtung (15) oder die Anpresseinrichtung (9) gleitet.

8. Schweißkopf nach Anspruch 7, **dadurch gekennzeichnet, dass** am Bandführungselement (11) oder der Schweißeinrichtung (15) oder der Anpresseinrichtung (9) eine entlang der Führungsfläche gleitende Rolle (14) oder Walze o.dgl. vorgesehen ist.

9. Schweißkopf nach einem der vorangehenden Ansprüche, **dadurch gekennzeichnet, dass** das Druckstück (19) schwenkbar gelagert und mit der Anpresseinrichtung (9) derart bewegungsgekoppelt ist, dass es in Abhängigkeit der Bewegung der Anpresseinrichtung (9) zwischen einer Arbeitsstellung, in der die Bandenden durch die Anpresseinrichtung (9) dagegen drückbar sind, und einer Nichtarbeitsstellung, in der das verschweißte Umreifungsband (2) freigegeben ist, bewegbar ist.

10. Schweißkopf nach Anspruch 9, **dadurch gekennzeichnet, dass** an der Anpresseinrichtung (9) oder dem Druckstück (19) eine Führungsfläche (35) vorgesehen ist, längs welcher das Druckstück (19) oder die Anpresseinrichtung (9) zur Bewegungssteuerung gleitet.

11. Schweißkopf nach Anspruch 10, **dadurch gekennzeichnet, dass** an dem Druckstück (19) oder der Anpresseinrichtung (9) eine entlang der Führungsfläche (35) gleitende Rolle (21), Walze o.dgl. vorgesehen ist.

12. Schweißkopf nach einem der Ansprüche 9 bis 11, **dadurch gekennzeichnet, dass** die Anpresseinrichtung (9) nach dem Zusammenpressen der angeschmolzenen Bandenden (30, 31) weiter in der Anpressrichtung bewegbar ist, während welcher Bewegung das bis dahin an der Führungsfläche (35) gegengelagerte Druckstück (19) freigegeben wird und wegschwenkt.

13. Schweißkopf nach Anspruch 12, **dadurch gekennzeichnet, dass** an der Anpresseinrichtung (9) ein oben liegender Anpressabschnitt (33) vorgesehen ist, der über wenigstens ein Federelement (32) mit dem Grundkörper (34) der Anpresseinrichtung (9) verbunden ist, welches Federelement (32) während der weiteren Bewegung der Anpresseinrichtung (9) komprimiert wird.

14. Bandumreifungsmaschine umfassend einen Schweißkopf nach einem der vorangehenden Ansprüche.

## Claims

1. Welding head for a strapping machine, comprising a strapping band guide element movable into and out of the band guide path, a welding device movable into and out of the band guide path for partially melting the band sections of the overlapping band ends to be welded together, and a pressing device for pressing the partially molten band sections against a pressure member, the band guide element (11) and the welding device (15) being pivotably mounted, **characterised in that** the band guide element (11) and the welding device (15) are coupled in motion to the longitudinally movable pressing device (9) in such a manner that they are movable into and out of the band guide path according to the movement of the pressing device (9), wherein
- the band guide element (11) is coupled directly to the pressing device (9) and the welding device (15) is coupled directly to the band guide element (11) in such a manner that upon movement of the band guide element (11) out of the band guide path, the welding device (15) is moved into the band guide path, or
- the welding device (15) is coupled directly to the pressing device (9) and the band guide element (11) is coupled directly to the welding device (15) in such a manner that upon movement of the welding device (15) into the band guide path the band guide element (11) is moved out of the band guide path, or
- both the welding device (15) and the band guide element (11) are coupled in motion directly to the pressing device (9).

2. Welding head according to claim 1, **characterised in that** the band guide element (11) and the welding device (15) pivot in the same direction during the common movement about a common fulcrum (14).

3. Welding head according to claim 1 or 2, **characterised in that** the coupling in motion of the band guide element (11) to the welding device (15) is automatically cancelled upon reaching the operating position of the welding device (15).

4. Welding head according to one of the preceding claims, **characterised in that** in order to couple the band guide element (11) to the welding device (15) a magnetic coupling (25) is provided.

5. Welding head according to one of the preceding claims, **characterised in that** the welding device (15) and/or the band guide element (11) is movable into or out of the operating position against a restoring force.

6. Welding head according to claim 5, **characterised in that** a spring (18), which pulls or pushes the welding device (15) or the band guide element (11) into the operating or non-operating position, is provided to generate the restoring force.

7. Welding head according to one of the preceding claims, **characterised in that** on the pressing device (9) or the band guide element (11) directly coupled thereto or the welding device (15) directly coupled thereto, a guide face (24) is provided for controlling the movement of the band guide element (11) or the welding device (15), along which face the band guide element (11) or the welding device (15) or the pressing device (9) slides.

8. Welding head according to claim 7, **characterised in that** on the band guide element (11) or the welding device (15) or the pressing device (9) a roll (14) or roller or the like is provided which slides along the guide face.

9. Welding head according to one of the preceding claims, **characterised in that** the pressure member (19) is pivotably mounted and is coupled in motion to the pressing device (9) in such a manner that it is movable according to the movement of the pressing device (9) between an operating position, in which the band ends may be pressed against the same by the pressing device (9), and a non-operating position in which the welded strapping band (2) is released.

10. Welding head according to claim 9, **characterised in that** on the pressing device (9) or the pressure member (19) a guide face (35) is provided, along which the pressure member (19) or the pressing device (9) slides to control the movement.

11. Welding head according to claim 10, **characterised in that** on the pressure member (19) or the pressing device (9) a roll (21), roller or the like is provided which slides along the guide face (35).

12. Welding head according to one of claims 9 to 11, **characterised in that** the pressing device (9) is movable further in the pressing direction after compression of the partially molten band ends (30, 31), during which movement the pressure member (19) hitherto abutting the guide face (35) is released and pivoted away.

13. Welding head according to claim 12, **characterised in that** on the pressing device (9) an upper pressing section (33) is provided, which is connected via at least one spring element (32) to the base body (34) of the pressing device (9), the spring element (32) being compressed during the further movement of the pressing device (9).

14. Strapping machine comprising a welding head according to one of the preceding claims.

## Revendications

1. Tête de soudage pour une machine de cerclage, comportant un élément de guidage de bande, apte à être déplacé dans la trajectoire de guidage de la bande et hors de celle-ci, un dispositif de soudage, apte à être déplacé dans la trajectoire de guidage de la bande et hors de celle-ci et destiné à souder les extrémités posées l'une sur l'autre de tronçons de bande à souder, ainsi qu'un dispositif de pression destiné à presser les tronçons de bande soudés contre un élément d'appui, l'élément de guidage de la bande (11) et le dispositif de soudage (15) étant montés de manière à pouvoir pivoter, **caractérisée en ce que** l'élément de guidage de la bande (11) et le dispositif de soudage (15) sont couplés en mouvement avec le dispositif de pression (9) mobile dans le sens longitudinal, de telle sorte qu'ils peuvent être déplacés en fonction du mouvement du dispositif de pression (9) dans la trajectoire de guidage de la bande ou hors de celle-ci, sachant que
- l'élément de guidage de la bande (11) est couplé directement avec le dispositif de pression (9) et le dispositif de soudage (15) est couplé directement avec l'élément de guidage de la bande (11), de telle sorte que, lorsque l'élément de guidage de la bande (11) se déplace hors de la trajectoire de guidage de la bande, le dispositif de soudage (15) est déplacé dans la trajectoire de guidage de la bande, ou
- le dispositif de soudage (15) est couplé directement avec le dispositif de pression (9) et l'élément de guidage de la bande (11) est couplé directement avec le dispositif de soudage (15), de telle sorte que, lorsque le dispositif de soudage (15) se déplace dans la trajectoire de guidage de la bande, l'élément de guidage de la bande (11) est déplacé hors de la trajectoire de guidage de la bande, ou
- le dispositif de soudage (15), de même que l'élément de guidage de la bande (11) sont couplés en mouvement directement au dispositif de pression (9).

2. Tête de soudage selon la revendication 1, **caractérisée en ce que** l'élément de guidage de la bande (11) et le dispositif de soudage (15), pendant leur mouvement conjoint, pivotent dans la même direction autour d'un point de rotation (13) commun.

3. Tête de soudage selon la revendication 1 ou 2, **caractérisée en ce que** le couplage en mouvement de l'élément de guidage de la bande (11) avec le dispositif de soudage (15) est désolidarisé automatiquement lorsque le dispositif de soudage (15) atteint la position de travail.

4. Tête de soudage selon l'une quelconque des revendications précédentes, **caractérisée en ce qu'**il est prévu un couplage magnétique (25) pour le couplage de l'élément de guidage de la bande (11) avec le dispositif de soudage (15).

5. Tête de soudage selon l'une quelconque des revendications précédentes, **caractérisée en ce que** le dispositif de soudage (15) et/ou l'élément de guidage de la bande (11) est apte à se déplacer à l'encontre d'une force de rappel dans la position de travail ou hors de celle-ci.

6. Tête de soudage selon la revendication 5, **caractérisée en ce qu'**il est prévu un ressort (18), qui est destiné à générer la force de rappel et qui tire ou pousse le dispositif de soudage (15) ou l'élément de guidage de la bande (11) dans la position de travail ou dans la position hors service.

7. Tête de soudage selon l'une quelconque des revendications précédentes, **caractérisée en ce qu'**une surface de guidage (24) est prévue sur le dispositif de pression (9) ou sur l'élément de guidage de la bande (11), couplé directement avec ce dernier, ou sur le dispositif de soudage (15) couplé directement, laquelle est destinée à commander le mouvement de l'élément de guidage de la bande (11) ou du dispositif de soudage (15) et le long de laquelle glisse l'élément de guidage de la bande (11) ou le dispositif de soudage (15) ou le dispositif de pression (9).

8. Tête de soudage selon la revendication 7, **caractérisée en ce qu'**un rouleau (14) ou cylindre ou élément similaire, glissant le long de la surface de guidage, est prévu sur l'élément de guidage de la bande (11) ou sur le dispositif de soudage (15) ou sur le dispositif de pression (9).

9. Tête de soudage selon l'une quelconque des revendications précédentes, **caractérisée en ce que** l'élément d'appui (19) est monté pivotant et est couplé en mouvement avec le dispositif de pression (9), de telle sorte que, en fonction du mouvement du dispositif de pression (9), il est apte à se déplacer entre une position de travail, dans laquelle les extrémités de la bande peuvent être pressées par le dispositif de pression (9) contre ledit élément d'appui, et une position hors service dans laquelle la bande de cerclage (2) soudée est libérée.

10. Tête de soudage selon la revendication 9, **caractérisée en ce qu'**il est prévu sur le dispositif de pression (9) ou sur l'élément d'appui (19) une surface de guidage (35), le long de laquelle glisse l'élément d'appui (19) ou le dispositif de pression (9) pour la commande du mouvement.

11. Tête de soudage selon la revendication 10, **caractérisée en ce que** sur l'élément d'appui (19) ou sur le dispositif de pression (9), il est prévu un rouleau (21), un cylindre ou un élément similaire glissant le long de la surface de guidage (35).

12. Tête de soudage selon l'une quelconque des revendications 9 à 11, **caractérisée en ce que**, lorsque les extrémités (30, 31) soudées de la bande sont comprimées l'une contre l'autre, le dispositif de pression (9) peut continuer à se déplacer dans la direction de pression, l'élément d'appui (19), en appui contre la surface de guidage (35), étant libéré et s'écartant par pivotement pendant ce mouvement.

13. Tête de soudage selon la revendication 12, **caractérisée en ce que** sur le dispositif de pression (9) est prévue une partie de pression (33) supérieure, qui est reliée au corps de base (34) du dispositif de pression (9) par l'intermédiaire d'au moins un élément ressort (32), ledit élément ressort (32) étant comprimé pendant que le dispositif de pression (9) continue à se déplacer.

14. Machine de cerclage comportant une tête de soudage selon l'une quelconque des revendications précédentes.
